## Europäisches Patentamt
## European Patent Office
## Office européen des brevets

(19)

(11) Veröffentlichungsnummer: **0 149 761**
**B1**

(12)

# EUROPÄISCHE PATENTSCHRIFT

(45) Veröffentlichungstag der Patentschrift:
29.06.88

(51) Int. Cl.⁴: **H 01 G 4/22**

(21) Anmeldenummer: **84114329.0**

(22) Anmeldetag: **27.11.84**

(54) Imprägnierter elektrischer Wickelkondensator.

(30) Priorität: **24.01.84 DE 3402340**

(43) Veröffentlichungstag der Anmeldung:
**31.07.85 Patentblatt 85/31**

(45) Bekanntmachung des Hinweises auf die Patenterteilung:
**29.06.88 Patentblatt 88/26**

(84) Benannte Vertragsstaaten:
**DE FR GB IT**

(56) Entgegenhaltungen:
**CH-A-397 866**
**DE-A-1 930 656**
**DE-B-1 000 529**
**FR-A-780 990**

(73) Patentinhaber: **Siemens Aktiengesellschaft Berlin und München, Wittelsbacherplatz 2, D-8000 München 2 (DE)**

(72) Erfinder: **Behn, Reinhard, Dipl.- Phys., Frasdorferstrasse 6d, D-8000 München 90 (DE)**
Erfinder: **Solar, Josef, Dipl.- Ing., Albert- Schweitzer- Strasse 51, D-7920 Heidenheim (DE)**

EP 0 149 761 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft einen imprägnierten elektrischen Wickelkondensator mit Dielektrikumsbändern, die zumindest teilweise aus durch das Imprägniermittel gequollenen Kunststoffolien bestehen, dessen Elektroden regenerierfähig dünne Metallschichten sind, die auf zumindest einem Teil der Dielektrikumsfolien angeordnet sind, bei dem die Elektroden unterschiedlicher Polarität an den Stirnseiten des Wickels mit Stirnkontaktschichten verbunden sind, und bei dem der Wickel mit Löchern versehen ist, die im dielektrisch wirksamen Teil des Wickels angeordnet sind.

Ein derartiger Kondensator ist aus der CH-A-397 866 bekannt. Die Löcher dienen der Entgasung vor dem Tränken mit einem Zusatzdielektrikum.

Weiterhin ist es aus der DE-B-1 000 529 bekannt, Löcher zum Imprägnieren in der Nähe der Stirnkontaktschichten im dielektrisch unwirksamen Teil des Wickels anzuordnen.

Es hat sich jedoch herausgestellt, daß das Imprägnieren bei Wickelbreiten größer als ca. 60 mm zu Schwierigkeiten führt. Dies wird darauf zurückgeführt, daß infolge der Quellung der Kunststoffolien durch das Imprägniermittel die vorgeschlagenen Imprägnierlöcher im dielektrisch unwirksamen Teil keine wesentlichen Vorteile erbringen. Weil aus technischen und wirtschaftlichen Gründen neuerdings aber wesentlich breitere Wickel, z. B. 140 mm Breite, hergestellt werden müssen, ist es wünschenswert, daß auch derart große Kondensatorwickel ordnungsgemäß imprägniert werden können. Es ist zwar in gewisser Weise möglich, durch niedrige Temperaturen beim Imprägnieren und ggf. lange Imprägnierzeiten durchimprägnierte Kondensatorwickel zu erhalten, aber aus wirtschaftlichen Gründen ist man bestrebt, zu kürzeren Imprägnierzeiten zu gelangen.

Aufgabe der Erfindung ist es daher, einen elektrischen Wickelkondensator der eingangs genannten Art anzugeben, der, insbesondere bei großen Wickelbreiten, in kurzer Zeit ordnungsgemäß imprägniert werden kann.

Dies wird erfindungsgemäß dadurch gelöst, daß die Löcher als Imprägnierlöcher dienen und daß der maximale Abstand R der Imprägnierlöcher untereinander auf der Wickelmantelfläche bei einer Imprägnierweite r : R = r/3 beträgt.

Bevorzugterweise ist der Durchmesser der Imprägnierlöcher größer als 0.5 mm.

Weitere Ausgestaltungen der Erfindung bestehen darin, daß die Dielektrikumsfolien aus Polypropylen und die Elektroden aus beidseitig mit Metallschichten versehenen Papierbändern bestehen, wobei die Papierbänder im feldfreien Raum angeordnet sind. Es ist vorteilhaft, wenn bei 8 µm Polypropylen-Folien und 9 µm Papierbändern die Imprägnierlöcher einen Durchmesser von 2 mm aufweisen, und der Wickel mit Mineralöl imprägniert ist.

Eine weitere Ausgestaltung der Erfindung besteht darin, daß die Elektroden derart aufgeteilt sind, daß sich eine innere Reihenschaltung ergibt, und daß die Imprägnierlöcher im Bereich der inneren Freistreifen bzw. der inneren Hohlräume in radialer Richtung angeordnet sind.

Die Vorteile des Gegenstandes der Erfindung werden anhand der folgenden Ausführungsbeispiele näher erläutert.

In der dazugehörenden Zeichnung zeigen
Fig. 1 und Fig. 2 ausschnittsweise einen aufgewickelten Kondensator,
Fig. 3 und Fig. 4 Schnittbilder zwei verschiedener Ausführungsformen und
Fig. 5 eine Anordnung der Imprägnierlöcher.

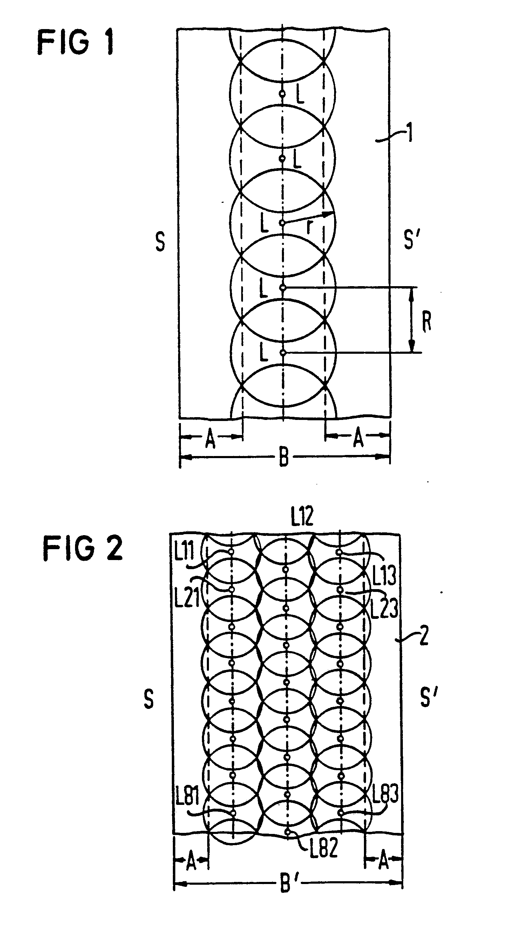

In der Fig. 1 ist ausschnittsweise ein abgewickeltes Dielektrikumsband 1 dargestellt, bei dem eine Reihe von Imprägnierlöcher L auf der abgewickelten Mantelfläche angeordnet ist. Das Dielektrikumsband 1 weist eine Breite B auf. Von den Stirnseiten S, S' erfolgt eine Imprägnierung des Dielektrikumsbandes 1 ungefähr bis zum Abstand A ordnungsgemäß. Der Abstand A beträgt beispielsweise bei einem Dielektrikumsband aus Polypropylen und einem Imprägniermittel aus Mineralöl 30 mm. Der in der Mitte des Dielektrikumsbandes 1 angeordnete Abschnitt würde somit ohne die erfindungsgemäß angeordneten Imprägnierlöcher nicht oder nur ungenügend imprägniert werden. Der Abstand R der Imprägnierlöcher L voneinander muß dabei derart gewählt werden, daß die Imprägnierweite r ausreicht, um das Dielektrikumsband 1 an allen Stellen mit dem erforderlichen Imprägniermittel zu versorgen. Bei der Dimensionierung ist zu beachten, daß die maximal erreichbaren Imprägnierweiten r der Imprägnierlöcher L kleiner als die Imprägnierweiten A sind. die von den Stirnseiten S, S' des Kondensatorwickels erreicht werden. Während der Imprägnierweg A von der Stirnseite in den Wickel beispielsweise 30 mm beträgt, ist die Imprägnierweite r nur 25 mm bei einem Imprägnierlochdurchmesser von ca. 2 mm. Weiterhin ist zu beachten, daß zwischen dem Durchmesser der Imprägnierlöcher L und der Imprägnierweite r ein Zusammenhang dergestalt besteht, daß mit kleineren Lochdurchmessern die Reichweite der Imprägnierung abnimmt. Dies kommt daher, daß der Strömungswiderstand durch die schmalen Spalten im Lochbereich berücksichtigt werden muß. Für den Lochdurchmesser gibt es dabei im Hinblick auf die Imprägniergeschwindigkeit und den Verlust an Kapazität durch die Bohrung ein Optimum. Dieses Optimum hängt von den Ölspalten ab, die wiederum durch den Wickelaufbau gegeben sind. Bei Kondensatorwickeln, die als Dielektrikumsbänder 8 µm dicke Polypropylenfolien und als Elektroden

2

beidseitig metallisierte im feldfreien Raum angeordnete 9 μm dicke Papierbänder aufweisen, ergibt sich bei einem Mineralöl als Imprägniermittel ein Optimum von 2 mm für den Durchmesser der Imprägnierlöcher L.

Bei Durchmessern < 0,5 mm der Imprägnierlöcher L erfolgt keine ordnungsgemäße Imprägnierung mehr.

In der Fig. 2 ist ausschnittsweise ein aufgewickeltes Dielektrikumsband 2 dargestellt, das eine Breite B' aufweist, die größer als die Breite B des in der Fig. 1 dargestellten Ausführungsbeispieles ist. Unter Zugrundelegung gleicher Verhältnisse, also gleiches Material für das Dielektrikumsband 2 und gleiches Imprägniermittel reicht hier eine einzige Lochreihe auf der Mantelfläche in der Mittelebene zwischen den beiden Stirnkontaktschichten S, S' zur ordnungsgemäßen Imprägnierung nicht mehr aus. Bei einem Dielektrikumsband 2 aus Polypropylen der Breite B' von 190 mm sind daher 3 nebeneinander angeordnete Reihen von Imprägnierlöchern L 11, L 21, .... L 81, .....; L 12, L 22, ....., L 82, ..... und L 13, L 23, .... L 83, ..... erforderlich.

Die Imprägnierlöcher L werden nach dem Wickeln durch Bohren in radialer Richtung hergestellt, was beispielsweise automatisch erfolgen kann. Als nächster Arbeistprozeß erfolgt das sog. Aufschließen.

Hierbei werden die Fehlstellen an den Imprägnierlöchern beseitigt. Die Selbstheilung an diesen Bohrstellen ist hervorragend, da sich an den Rändern der Imprägnierlöcher L beim Regeneriervorgang kein hoher Druck aufbauen kann. Die Regeneriergase entweichen durch die Imprägnierlöcher. Bei diesem Prozeß entstehen auf den metallisierten Folien isolierende Ränder rings um die Bohrlöcher.

Nach dem Aufschließprozeß wird der Kondensator getrocknet und imprägniert. Durch die Anwesenheit der Imprägnierlöcher findet auch eine starke Verkürzung der Trocknungszeit statt, da das Wasser konzentrisch zu den Löchern diffundiert und nicht den langen Weg zu den Stirnseiten nehmen muß.

Die Aufschließspannungen liegen in bekannter Weise über dem Betriebsspannungen, so daß nach der Imprägnierung die Löcher elektrisch voll stabilisiert sind.

Der Kapazitätsverlust durch die Imprägnierlöcher ist relativ gering und beträgt bei dem angegebenen Beispiel etwa 0,3 %.

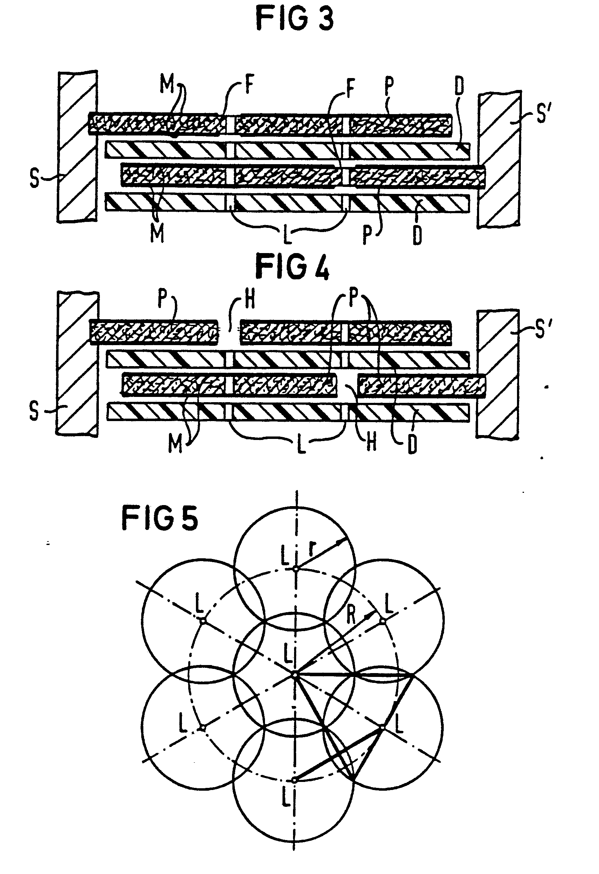

In der Fig. 3 ist der teilweise Schnitt durch einen Kondensatoraufbau dargestellt, der für höhere Spannungen geeignet ist. Die Dielektrikumsbänder D bestehen beispielsweise aus Polypropylen und die Elektroden aus auf Papierbändern P angeordnet regeneriefähig dünnen Metallschichten M. Die Metallschichten M sind auf beiden Oberflächen der Papierbänder P angeordnet, so daß sie durch die Stirnkontaktschichten S, S' kurzgeschlossen werden und somit der Belagtträger im feldfreien Raum angeordnet ist. Die Metallschichten M weisen Freistreifen F, auf, so daß sich ein Kondensatoraufbau mit innerer Reihenschaltung ergibt. Vorzugsweise sind die Imprägnierlöcher L im Bereich dieser Freistreifen F angeordnet, da in diesen Freistreifen F kein elektrisches Feld vorhanden ist, so daß keine Fehlstellen entstehen können, die durch Aufschließen zur Kapazitätsabnahme führen würden.

In der Fig. 4 ist ein weiteres Ausführungsbeispiel dargestellt, das im Prinzip dem Ausführungsbeispiel gemäß der Fig. 3 entspricht, bei dem jedoch kapazitiv nicht wirksame streifenförmige Hohlräume H auf den Belagträgern P angeordnet sind. Vorzugsweise sind die Imprägnierlöcher L im Bereich dieser Hohlräume H angebracht. Da diese streifenförmigen Hohlräume H im allgemeinen sehr dick (z. B. 10 μm) im Vergleich zu den schmalen Imprägnierspalten ( ⩽ 0,5 μm) sind, ist der Imprägnierwiderstand in den Hohlräumen H gegenüber dem der Imprägnierspalte zu vernachlässigen. Darum benötigt man bei diesem Aufbau jeweils nur ein Imprägnierloch pro Umfang und Spalt. Wenn also z. B. ein Kondensator der Wickel breite 190 mm (wie in Fig. 2 dargestellt) einen Aufbau mit zweifach innerer Reihenschaltung hätte, so würde sich die Anzahl der Löcher L 12 ..... L n2 auf ein Loch reduzieren.

Werden die Wickel auf Kerne gewickelt, so ist vorzugsweise auch der Kern zu durchbohren, damit die Imprägnierflüssigkeit auch vom Kernloch aus in den Wickel eintreten kann.

Die bisher aufgezeigten Ausführungsformen stellen spezielle Beispiele dar. Die Imprägnierweite r hängt vom Aufbau des Wickels und dem verwendeten Imprägniermittel ab. Der Gegenstand der Erfindung bezieht sich allgemein darauf, daß die Imprägnierlöcher L auf der Wickel-Mantelfläche bei einer Imprägnierveite r einen maximalen Abstand R:

$$R = r\sqrt{3}$$

aufweisen, da dann jeder Punkt des Wickels vom Imprägnermittel erreicht wird. Diese allgemeine Aussage ist in der Fig. 5 bildlich dargestellt.

Neben den in den Figuren gezeigten Ausführungsbeispielen läßt sich der erfindungsgemäße Gedanke auch bei anderen Kondensatoraufbauten anwenden, bei denen beispielsweise die Elektroden direkt auf den Kunststoffolien angeordnet sind. Als Kunststoffolien und Imprägniermittel sind dabei alle aus dem Stand der Technik bekannten Materialien geeignet.

**Patentansprüche**

1. Imprägnierter elektrischer Wickelkondensator mit Dielektrikumsbändern, die zumindest teilweise aus durch das Imprägniermittel gequollenen Kunststoffolien bestehen, dessen Elektroden regenerierfähig dünne Metallschichten sind, die auf zumindest einem Teil der Dielektrikumsfolien angeordnet sind, bei dem die Elektroden unterschiedlicher Polarität an den Stirnseiten des Wickels mit Stirnkontaktschichten verbunden sind und bei dem der Wickel mit Löchern versehen ist, die im dielektrisch wirksamen Teil des Wickels angeordnet sind, dadurch gekennzeichnet, daß die Löcher als Imprägnierlöcher dienen und daß der maximale Abstand R der Imprägnierlöcher untereinander auf der Wickel-Mantelfläche bei einer Imprägnierweite r:
R = r/3 beträgt.

2. Imprägnierter elektrischer Wickelkondensator nach Anspruch 1, dadurch gekennzeichnet, daß der Durchmesser der Imprägnierlöcher größer als 0,5 mm ist.

3. Imprägnierter elektrischer Wickelkondensator nach Anspruch 1 oder 2, dadurch gekennzeichnet, daß die Dielektrikumsfolien aus Polypropylen und die Elektroden aus beidseitig mit Metallschichten versehenen Papierbändern bestehen und daß die Papierbänder im feldfreien Raum angeordnet sind.

4. Imprägnierter elektrischer Wickelkondensator nach Anspruch 3, dadurch gekennzeichnet, daß die Polypropylenfolien 8 μm und die Papierbänder 9 μm dick sind, daß die Imprägnierlöcher einen Durchmesser von 2 mm aufweisen, und daß der Wickel mit Mineralöl imprägniert ist.

5. Imprägnierter elektrischer Wickelkondensator nach einem der Ansprüche 1 bis 4, dadurch gekennzeichnet, daß die Elektroden derart aufgeteilt sind, daß sich eine innere Reihenschaltung ergibt, und daß die Imprägnierlöcher im Bereich von inneren Freistreifen bzw. inneren Hohlräumen in radialer Richtung angeordnet sind.

## Claims

1. An impregnated electrical wound capacitor comprising dielectric strips which consist at least in part of synthetic resin films swollen by the impregnating agent, and the electrodes of which consist of regenerably-thin metal layers which are arranged on at least a part of the dielectric films, where the electrodes are connected with differing polarity at the end faces of the roll to end contact layers and where the winding is provided with holes which are arranged in the dielectrically active part of the roll, characterised in that the holes serve as impregnating holes, and that the maximum distance R between the impregnating holes one from another on the outer surface of the roll, with an impregnating width r, is R = r/3.

2. An impregnated electrical wound capacitor as claimed in Claim 1, characterised in that the diameter of the impregnating holes is greater than 0.5 mm.

3. An impregnated electrical wound capacitor as claimed in Claim 1 or 2, characterised in that the dielectric films consist of polypropylene and the electrodes consist of paper strips provided with metal layers on both sides, and that the paper strips are arranged in the field-free space.

4. An impregnated electrical wound capacitor as claimed in Claim 3, characterised in that the thickness of the polypropylene foils is 8 μm and the thickness of the paper strips is 9 μm, that the impregnating holes have a diameter of 2 mm, and that the winding is impregnated with mineral oil.

5. An impregnated electrical wound capacitor as claimed in one of Claims 1 to 4, characterised in that the electrodes are divided up in such manner that an internal series connection is formed, and that the impregnating holes are arranged in the radial direction in the region of internal free strips or internal cavities.

## Revendications

1. Condensateur électrique bobiné, imprégné, comprenant des bandes de diélectrique qui sont formées au moins en partie de films de matière plastique gonflés par l'imprégnant, dont les électrodes sont de minces couches métalliques susceptibles d'être régénérées, qui sont disposées sur une partie au moins des films de diélectrique, condensateur dans lequel les électrodes de polarités différentes sont reliées aux faces d'extrémité du bobinage à des couches de contact d'extrémité et dans lequel le bobinage est pourvu de trous situés dans la partie diélectriquement active du bobinage, caractérisé en ce que les trous servent de trous d'imprégnation et que la distance maximale R des trous d'imprégnation entre eux, sur la surface latérale du bobinage, correspond à R = r/3, où r est la distance d'imprégnation.

2. Condensateur selon la revendication 1, caractérisé en ce que le diamètre des trous d'imprégnation est supérieur à 0,5 mm.

3. Condensateur selon la revendication 1 ou 2, caractérisé en ce que les films de diélectrique sont en polypropylène et les électrodes sont formées par des bandes de papier pourvues de couches métalliques sur les deux faces, et que les bandes de papier sont disposées dans l'espace exempt de champ.

4. Condensateur selon la revendication 3, caractérisé en ce que les films de polypropylène ont une épaisseur de 8 μm et les bandes de papier ont une épaisseur de 9 μm, que les trous d'imprégnation ont un diamètre de 2 mm et que le bobinage est imprégné d'huile minérale.

5. Condensateur selon une des revendications 1 à 4, caractérisé en ce que les électrodes sont divisées de manière que s'établisse un montage en série interne et que les trous d'imprégnation sont disposés radialement dans la zone de bandes ou marges internes libres ou de cavités internes.

**FIG 1**

**FIG 2**

# FIG 3

# FIG 4

# FIG 5